# EUROPEAN PATENT SPECIFICATION

(11) **EP 0 614 473 B1**
(45) Date of publication and mention of the grant of the patent: **18.07.2001**
(21) Application number: 93900692.0
(22) Date of filing: 20.11.1992
(51) Int. Cl.: C08K 5/06, C08K 5/10, C09J 133/08

(54) **REMOVABLE AND GUILLOTINABLE EMULSION PRESSURE-SENSITIVE ADHESIVES**
ENTFERNBARE UND SCHNEIDBARE DRUCKEMPFINDLICHE EMULSIONSKLEBSTOFFE
EMULSIONS AUTO-ADHESIVES DETACHABLES POUVANT ETRE DECOUPEES

(30) Priority: 22.11.1991 US 795981
(43) Date of publication of application: 14.09.1994
(73) Proprietor: AVERY DENNISON CORPORATION, Pasadena, CA 91109 (US)
(72) Inventor: REAVES, Jessie, Coston, Los Angeles, CA 90019 (US); SHIAONUNG, John, Su, Buena Park, CA 90620 (US); VON KLEIST, Peter Robin, Alta Loma, California 91737 (US); MAYER, Andre, CH-8280 Kreuzlingen (CH); STIEGER, Manfred, Karl, CH-9400 Rorschach (CH)
(74) Representative: Kirkham, Nicholas Andrew
(86) International application number: PCT/US92/10233
(87) International publication number: WO 93/10177

(56) References cited:
- GB-A- 2 206 592
- US-A- 4 522 998
- US-A- 4 783 354
- US-A- 4 925 908
- US-A- 5 059 479
- US-A- 5 073 457

## Description

### Field of the Invention

The invention is directed to pressure-sensitive adhesives that exhibit clean removability from various substrates without sacrificing guillotinability.

### Background of the Invention

It is well known in the pressure-sensitive adhesives industry that two approaches have been tried to achieve a good removability, namely, controlled coating processes and/or adhesive rheology.

If the coat weight of the adhesive is controlled within a certain range, the adhesive will exhibit a reduced peel force and will have a removable behavior for a short period of time. However, due to the inherent permanent characteristic of most adhesives, the adhesion will grow with age and become a non-removable.

An alternative is to use a discontinuous coat of adhesive segments or miscrospheres providing in effect a reduced coat weight. This approach is based on adhesion microspheres described in U.S. Patent 3,691,140 to Silver, U.S. Patent 4,166,152 to Baker et al, U.S. Patent 4,495,318 and 4,598,112 to Howard, U.S. Patent 4,810,763 to Mallya et al and adhesive segment described in European Patent 0180598.

The rheological approach has been to design a high gel, low Tg adhesive which has a low tangent delta at the debonding frequency. These rheological properties enable the adhesive to behave like a soft material and have a low adhesion force during the peel test. This rheological approach, however, generates problems in the guillotine process.

In other words, good removability and good guillotinabilty are often properties which are contradictory to each other. The latter is a must requirement for all adhesives used in the offset sheeting business.

There have also been other attempts to formulate an adhesive to reduce the bonding between an adhesive and knife during the guillotine process. Polyalkalene glycols such as polyethylene glycol (PEG) have been used to achieve this property with tackified, water insoluble elastomers as described in U.S. Patent 4,548,845 to Parsons et al, but phase separation and incompatibility between the adhesive system and PEG have limited its amount and usage. Silicones, as described for instance in U.S. Patents 4,151,319 to Sackoff and 4,346,189 to Laurant have also been suggested. The products display good guillotinability, and initial repositionability. Repositionability, however, is lost with time.

It would be desirable to provide a pressure-sensitive adhesive composition which exhibits removable and repositionable properties which do not deteriorate with age, as well as good guillotinability for use in offset printing applications.

According to one aspect of the present invention, there is provided a guillotinable and substrate-removable pressure-sensitive adhesive composition comprising a tacky acrylic emulsion polymer in admixture with 0.5 to 1.5% by weight of an emulsifiable wax, based on the weight of the acrylic emulsion polymer and the emulsifiable wax.

Also according to this aspect of the invention, there is provided a guillotinable and removable pressure-sensitive adhesive stock comprising a backing providing on a surface thereof a coating of a guillotinable and removable pressure-sensitive adhesive composition comprising an acrylic emulsion polymer in admixture with from 0.5 to 1.5% of an emulsifiable wax, based on the weight of emulsifiable wax and the acrylic emulsion polymer.

According to a second aspect of the present invention, there is provided a method for preparing a guillotinable and substrate-removable pressure-sensitive adhesive composition comprising:
providing a tacky pressure-sensitive adhesive acrylic emulsion polymer; and
mixing the emulsion polymer with a modifying agent to reduce its adhesivity promoting removability and provide sufficient lubricity to promote guillotinability, the emulsion-modifying agent being selected from:
   i. a nonionic surfactant present in an amount of from 0.5 to 3.5% by weight based on the weight of the nonionic surfactant and the emulsion polymer;
   ii. an emulsifiable wax present in an amount of from 0.5 to 1.5% by weight based on the weight of the emulsifiable wax and the emulsion polymer; and
   iii. a blend of an emulsifiable wax and a nonionic surfactant in which the emulsifiable wax and nonionic surfactant are present in a combined amount of less than 3% by weight based on the total weight of the emulsifiable wax, surfactant and the emulsion polymer.

Also according to this aspect of the invention, there is provided a method for preparing a guillotinable and removable pressure-sensitive adhesive stock comprising the use of an adhesive composition prepared by the steps of:
providing a tacky pressure-sensitive adhesive acrylic emulsion polymer;
modifying the emulsion polymer by adding to it a modifying agent that reduces its adhesivity promoting removability and provides sufficient lubricity to promote guillotinability, to form a coating on the stock of a guillotinable and removable pressure-sensitive adhesive, the emulsion-modifying agent being selected from:
   i. from 0.5 to 1.5% of an emulsifiable wax based on the weight of emulsifiable wax and emulsion polymer;
   ii. from 0.5 to 3.5% by weight of a nonionic surfactant based on the weight of surfactant and emulsion polymer; and
   iii. a mixture of a nonionic surfactant and an emulsifiable wax in which the mixture of the wax and nonionic surfactant are present in an amount of less than 3% by weight of the added emulsifiable wax, surfactant and emulsion polymer.

The invention further contemplates use of a nonionic surfactant, an emulsifiable wax or a mixture of a nonionic surfactant and an emulsifiable wax, as an additive to a pressure-sensitive acrylic adhesive emulsion polymer to reduce adhesivity of an adhesive coating made from the emulsion, to promote removability, and to provide sufficient lubricity of the coating to promote guillotinability, wherein
i. said surfactant is used in an amount of 0.5 to 3.5% by weight based on the weight of the surfactant and the emulsion polymer;
ii. said wax is used in an amount of 0.5 to 1.5% by weight based on the weight of the wax and the emulsion polymer, and
iii. the mixture of surfactant and wax is used in a combined amount of less than 3% by weight based on the total weight of surfactant, wax and emulsion polymer.

The result of combining an emulsion acrylic, tacky pressure-sensitive adhesive with an emulsifiable wax surfactant or mixtures thereof in the specified concentrations is to reduce adhesivity of the adhesive to a level sufficiently low to allow removability and at the same time to provide it with sufficient lubricity to afford excellent quillotinability including excellent cuttability.

The acrylic pressure-sensitive adhesive emulsion polymers used in the invention may be inherently tacky or tack may be provided by the inclusion of a tackifier or plasticizer during the compounding stage. A plasticizer may also be used to enhance removability. The adhesive may be used as such or its tack is reduced by crosslinking. The wax and/or surfactant used in the method claimed hereafter are provided during the compounding stage and are cast as part of a homogenous emulsion to provide a pressure-sensitive adhesive coating at any desired uniform level of removability, as compared to the unmodified acrylic pressure-sensitive adhesive composition. This is in consequence of a reduction in adhesion level. The additive at the same time imparts excellent guillotinability.

It is presently preferred to employ a mixture of polymeric waxes alone or with a disodium n-octadecyl sulfosuccinamate in combination with butyl benzyl phthalate or a surfactant which is an ethyleneoxide-propyleneoxide copolymer with nonionic emulsified waxes.

The presently preferred emulsion acrylic adhesive is a crosslinked acrylic polymer based on 2-ethylhexyl acrylate, butyl acrylate and a carboxylic acid or a copolymer of 2-ethylhexyl acrylate, methacrylic acid and acrylic acid.

### Brief Description of the Drawings

Fig. 1 illustrates 90° peel and looptack properties of adhesive compositions which conform to the instant invention in comparison to controls.

Fig. 2 illustrates 90° peel adhesion for adhesives of the instant invention used with various backings for face stocks.

### Detailed Description

According to the present invention, there are provided pressure-sensitive adhesives which when cast from an emulsion onto a suitable backing or face stock display the properties of excellent guillotinability and repositionability.

Adhesives made according to the method of this invention are based on an emulsion acrylic polymer, preferably crosslinked, compounded in emulsion with an emulsifiable wax, a surfactant or mixtures thereof, and when cast onto a suitable backing, they facilitate face stock guillotining for offset printing applications and possess removability and repositionability.

The acrylic pressure-sensitive adhesive emulsion polymers desirably contain on a percent by weight basis from 30 to about 98% percent by weight of one or more alkyl acrylates containing 4 to 8 carbon atoms in the alkyl group. Preferably the total alkyl acrylate concentration is from 60 to 95% by weight based on the total weight of the monomers. Useful alkyl acrylates include n-butyl acrylate, 2-ethylhexyl acrylate, isooctyl acrylate and the like, with 2-ethylhexyl acrylate and mixtures of 2-ethylhexyl acrylate and butyl acrylate being preferred.

The second component of the acrylate polymers is one of more modifying monomers which affect the performance of the acrylate monomers. Among them there may be included one or more unsaturated carboxylic acids containing from 3 to 5 carbon atoms normally present in an amount of about 2 to 10% by weight of the monomers forming the acrylic polymers. Unsaturated carboxylic acid, included among others acrylic acid, methacrylic acid, itaconic acid and the like. Acrylic acid and methacrylic acid or mixtures thereof are presently preferred.

Other monomers which may be present are one or more vinyl esters which may be present in an amount of from 15 to 35% by weight of the total monomers and can include monomers such as vinyl acetate, vinyl butyrate, vinyl propanate, vinyl isobutarate and the like. In addition there may be provided one or more diesters of dicarboxylic acids, such as di-2-ethylhexyl maleate and di-2-ethylhexyl fumarate and the like.

The acrylic polymers are normally are prepared by emulsion polymerization in the presence of one or more surfactants including a reactive surfactant which when reacted becomes part of the polymer. The acrylic polymer may be used as formed and, if desired, crosslinked either during or following polymerization by a conventional means and are provided as emulsion of the solids content of 50 or more percent by weight solids , normally 60 or more percent by weight solids.

The presently preferred acrylic emulsion polymers are a crosslinked acrylic polymer containing butyl acrylate, 2-ethylhexyl acrylate and an unsaturated carboxylic acid sold by Avery Chemical Company division of Avery Dennison Corporation and a copolymer of about 98% 2-ethylhexyl acrylate, about 1.4% methacrylic acid and about 0.6% acrylic acid.

To induce the repositionability and guillotinability the emulsion polymer pressure-sensitive adhesives, in the methods of this invention, are combined with an emulsifiable wax, a surfactant or mixtures thereof which are combined with the acrylic pressure-sensitive adhesive polymer at the compounding stage. It is presently preferred that the additive be an emulsified surfactant, in particular a nonionic surfactant known as Pluronic® F-108, a normally solid polyoxypropylene-polyoxethylene block copolymer having a molecular weight of about 14600 and an HLB value greater than 24. The surfactant is manufactured and sold by BASF. The most preferred surfactant is disodium n-octadecyl sulfosuccinamate manufactured and sold by American Cyanamid Co.

Wax additives not only provide a special lubrication between the knife surface and the adhesive, but also dramatically reduces adhesion level. Wax emulsions include emulsified petroleum resins, paraffin waxes, oxidized paraffin waxes, microcrystalline waxes, carnauba waxes, montain waxes, polyethylene waxes and the like emulsified to form a nonionic wax emulsion. A preferred wax is ME47950, a nonionic paraffin wax emulsion manufactured and sold by Michelman, Inc. of Cincinnati, Ohio. The most preferred waxes are emulsified mixed modified polymeric waxes supplied by BVK-Cera B.V. Netherlands.

The face stocks may vary widely and include paper face stocks, and polymeric face stocks such as vinyl and acetate face stock. In the presently preferred construction the face stocks include cast coated high gloss paper, matte litho paper, uncoated offset paper, recycled matte litho paper, latex saturated face paper, clear acetate, matte acetate, vinyl and the like, coated with adhesive to a level of 15 to 21, preferably 18 g/m² with the adhesive protected by a silicone release liner.

The products of the present invention, as illustrated by the Examples, uniquely provide removability and guillotinability without developing curl even when paper is used as the face stock and in the release liner. It also displayed uniqueness as compared to other removable papers and tapes in that they displayed the ability to be removed from certain substrates without tear of the backing or face stock and yet provide a low enough adhesion to allow removability and repositionability.

For purpose of illustrating the invention, there was used for Examples 1 to 3 as the base adhesive the preferred commercial crosslinked acrylic emulsion polymer an emulsion polymerized mix of butyl acrylate, 2-ethylhexyl acrylate and an unsaturated carboxylic acid manufactured by Avery Chemical with the name 220X.

For Control 1 the emulsion polymer was used as received. For Examples 1 to 3 there was formulated an emulsion solution of 220X, Pluronic® F-108 a normally solid polyoxypropylene-polyoxyethylene block copolymer having an average molecular of 14600 and melting point of 57°C and HLB of greater than 24 manufactured by BASF. It was dissolved in dionized water added to the 220X emulsion and a coatable mixture having a solids content of about 52% solids and a viscosity of 7,000 mPa.s (desired range 4,000 - 10,000 mPa.s). The composition contained about 3% by weight surfactant based on the weight of surfactant and polymer (Adhesive A). Adhesive B was made the same way but contains about 2% surfactant.

The formulated emulsion contained 3% surfactant based on the weight of surfactants and polymer when coated on the backing described below in Table I has the following approximate properties at a coat weight of about 18 g/m².

**TABLE 1**

| Example | 1 | 2 | 3 |
|---|---|---|---|
| | Backing | | |
| Property | X¹ | Y² | Z³ |
| Release, gr | 30 | 30 | 50 |
| (16 hrs. aged) | 0.14 | 0.089 | 0.11 |
| 180° peel kg/cm (lb/in) (16 hrs. aged) | (0.8 | (0.5) | (0.6) |

| | | | |
|---|---|---|---|
| 1. Satin lithograph paper | | | |
| 2. Blue-white high gloss | | | |
| 3. Recycled matte litho | | | |

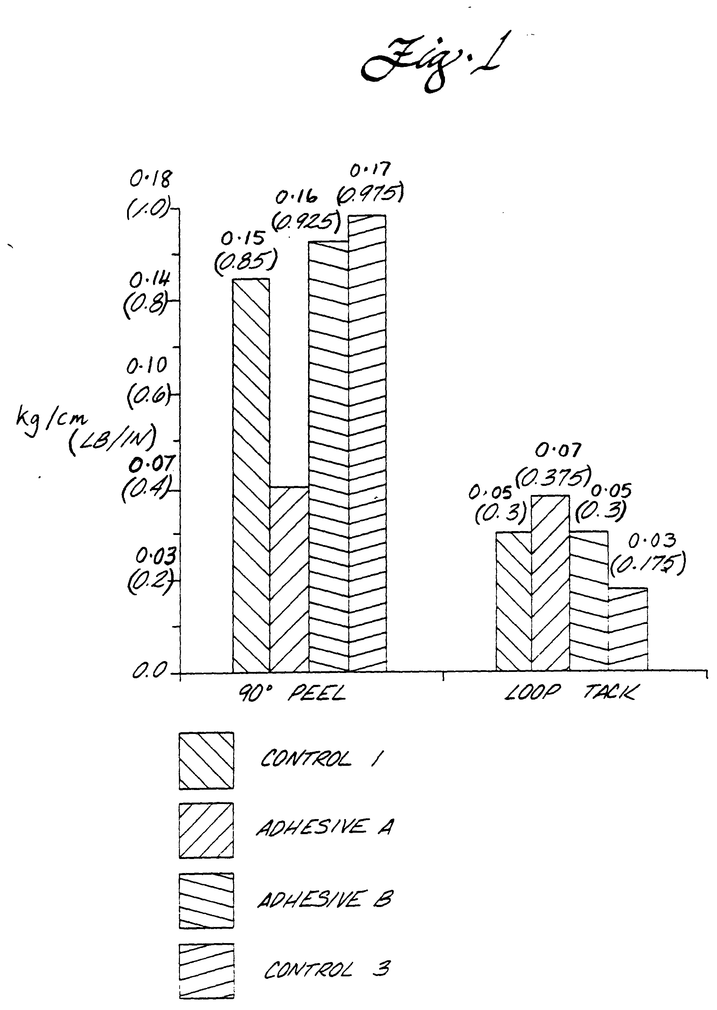

Table 2 and Fig. 1 compares adhesive coating performance of Control 1, Adhesive A and Adhesive B, Control 2 which contained 3% by weight polyethylene glycol and Control 3 containing 1% by weight polyethylene glycol. Polyethylene glycol was added by a aqueous 50% solution and exhibited phase separation.

Table 3 compares removable performance of the composition of Example 1 from various substrates and aging for the dwell time shown. "Yes" means removability. The conclusion drawn was that performance on glass, stainless steel and corrugated cardboard was good, but not good on painted metal, polyethylene and ABS substrates.

Table 4 compares the performance of the adhesive of Example 1 on a matte acetate backing. Based on the results it was concluded priming of the backing is required.

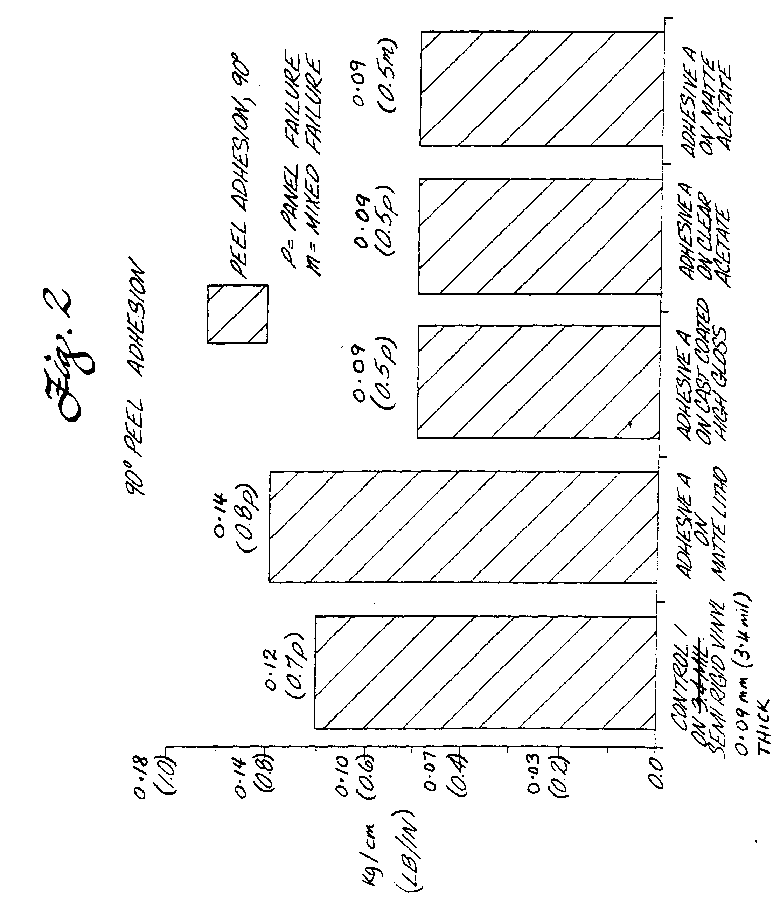

Fig. 2 is a block diagram which compares peel adhesion in kg/cm and lb/in for Control 1 to the Adhesive A containing 3% surfactant on various backings.

When a 100 sheet stack of the construction of Example 1 was guillotined 15 times it was observed that both sides of the knife and stack were rated excellent with no build-up of adhesive on the stack or the blade.

Table 5 shows the performance of the adhesive of Control 1 compounded with 1% by weight wax based on the weight of the polymer and wax of a paraffin wax provided as a nonionic emulsion. This is Adhesive C. The emulsion was known as ME47950 paraffin wax having a melting point of 64°C (147°F), a solids content of 50% with an average particle size of 0.35 micron. The backing was Matte Litho. Overall guillotinability performance was excellent.

**TABLE 4**

| | Substrate | | | | | | |
|---|---|---|---|---|---|---|---|
| | Room Temperature | | | | | | |
| | Glass | Painted Metal | Stainless Steel Box | ABS | PE | Corrugated | Paper |
| Dwell, Days | | | | | | | |
| 7 | FS | FS | FS | _ | FS | YES | |
| 14 | FS | FS | FS | _ | FS | YES with tissue | |

| 50°C Aged | | | | | | | |
|---|---|---|---|---|---|---|---|
| Dwell Days | | | | | | | |
| 7 | FS | FS | FS | FS | FS | TEAR | |
| 14 | FS | FS | FS | FS | FS | TEAR | |
| YES: GOOD REMOVABILITY | | | | | | | |
| PT: PAPER TEAR | | | | | | | |
| FS: FACE SEPARATION, ADHESIVE IS NOT ADHERED TO THE BACKING | | | | | | | |

**TABLE 5**

| | Substrate | | | | | | |
|---|---|---|---|---|---|---|---|
| | Room Temperature | | | | | | |
| | Glass | Painted Metal | Stainless Steel Box | ABS | PE | Corrugated | Paper |
| Dwell, Days | | | | | | | |
| 7 | YES | YES | _ | YES | _ | YES | YES |
| 14 | YES | YES | _ | YES | _ | YES | YES |
| 18 | YES | YES | _ | YES | _ | YES | YES |
| 21 | YES | YES | _ | YES | _ | YES | SLIGHTLY TISSUE TEAR |

| 50°C Aged | | | | | | | |
|---|---|---|---|---|---|---|---|
| Dwell, Days | | | | | | | |
| 7 | YES | YES | _ | YES | YES | YES | YES |
| 10 | YES | YES | _ | YES | YES | YES | _ |
| 24 | YES | YES | _ | YES | YES | YES | _ |
| YES: GOOD REMOVABILITY | | | | | | | |
| PT: PAPER TEAR | | | | | | | |
| FS: FACE SEPARATION, ADHESIVE IS NOT ADHERED TO THE FACE STOCK | | | | | | | |

Attached Table 6 shows the removability performance of the Adhesive C deposited at a coat weight of 25 g/m² on Mate Litho backing. Table 7 shows the performance at 0.75% by weight of the wax (Adhesive D) and Table 8 shows performance of 0.5% by weight of the wax (Adhesive E). Removability and guillotinability were in all instances excellent. In Tables 6, 7 and 8, the values for 90° Peel and Looptack are given in lb/in. Tables 6A, 7A and 8A quote 90° Peel and Looptack in terms of kg/cm.

In the aging tests, exposure at 50°C for 1 week is equivalent to 6 months at room temperature and 2 weeks at 50°C is equivalent to 1 year at room temperature.

### Control 4 and Examples 5 to 8 and Reference Example 9

For Control 4 and Examples 5 to 8, and Reference Example 9, there was used as the polymer AVC 3666 at 67% solids acrylic polymer emulsion in which the polymer contains about 98% 2-ethylhexyl acrylate, about 1.4% by weight methacrylic acid and about 0.6% acrylic acid. The wax used was Aquacer 533, an emulsion of mixed polymeric waxes supplied by BYK-Cera B.V., Netherlands, and as the surfactant Aerosol 18, a paste of 35% disodium n-octadecyl sulfosuccinamate in water provided by American Cyanamid Co. The plasticizer was butyl benzyl phthalate. The following are the presently preferred compositions:

| | | |
|---|---|---|
| A. | AVC 3666 (67% TSC) | 100 parts wet |
| | Aerosol 18 (35% TSC) | 5.0 |
| | Butyl benzyl phthalate | 5.0 |
| B. | AVC 3666 (67% TSC) | 100 parts wet |
| | Aquacer 533 (40% TSC) | 2.1 |
| | Butyl benzyl phthalate | 5.0 |
| TSC = Total Solids Content | | |

The control and example compositions are shown in Table 9. Adhesive properties are shown in Table 10. The control displayed a build-up of adhesion with age. The compositions of Examples 5 and 8 showed no build-up of adhesion to a variety of substrates. The composition of Examples 6 and 7 showed a build-up of adhesion to polymethyl methacrylate at 70° C. It was observed that the mixture of polymer and wax gave adequate removability from most surfaces, but the addition of the plasticizer to the blend gave stable removability from a wider variety of surfaces. As with all other compositions of the invention, the examples gave excellent guillotinability and cutability.

**TABLE 6**

| Substrate | Aging Cond. | 90° Peel | Looptack | Edge Lift | Failure | Remarks |
|---|---|---|---|---|---|---|
| stainless | 1wk/25°C | 0.8 | 0.01 | none | panel | clean removability |
| steel | 1wk/50°C | 1.15 | 0.01 | a | panel | clean removability |
| | 2wk/25°C | 0.75 | 0.30 | a | panel | clean removability |
| | 2wk/50°C | 1.4 | 0.30 | a | panel | clean removability |
| Glass | 1wk/25°C | 0.17 | | b | panel | clean removability |
| | 1wk/50°C | 5 | | a | panel | clean removability |
| | 2wk/25°C | 1.65 | | a | panel | clean removability |
| | 2wk/50°C | 0.25 | | a | panel | clean removability |
| | | 1.0 | | | | |
| Painted M | 1wk/25°C | 0.75 | | a | panel | clean removability |
| | 1wk/50°C | 1.2 | | a | panel | clean removability |
| | 2wk/25°C | 0.85 | | a | panel | clean removability |
| | 2wk/50°C | 1.1 | | a | panel | clean removability |
| Plastic | 1wk/25°C | 1.45 | | a | panel | clean removability |
| | 1wk/50°C | 2.05 | | a | panel | clean removability |
| | 2wk/25°C | 1.5 | | a | panel | clean removability |
| | 2wk/50°C | 1.9 | | a | panel | clean removability |
| Corrugated | 1wk/25°C | 0.37 | | none | panel stain | clean removability |
| | 1wk/50°C | 5 | | a | panel stain | clean removability |
| | 2wk/25°C | 0.42 | | a | panel stain | clean removability |
| | 2wk/50°C | 5 0.45 0.5 | | a | panel stain | clean removability |
| | | | | | | |
| | | | | | | |
| Paper | 1wk/25°C | 0.85 | | a | panel | clean removability |
| | 1wk/50°C | 0.90 | | a | panel | clean removability |
| | 2wk/25°C | 1.15 | | a | panel | clean removability |
| | 2wk/50°C | 1.5 | | a | panel | clean removability |
| a = 0.40 mm (1/64 inch); b = 0.80 mm (1/32 inch). | | | | | | |

**TABLE 7**

| Substrate | Aging Cond. | 90° Peel | Looptack | Edge Lift | Failture | Remarks |
|---|---|---|---|---|---|---|
| Stainless | 1wk/25°C | 0.975 | 0.01 | none | panel | clean removability |
| steel | 1wk/50°C | 1.35 | 0.01 | a | panel | clean removability |
| | 2wk/25°C | 0.9 | 0.01 | a | panel | clean removability |
| | 2wk/50°C | 1.55 | 0.01 | a | panel | clean removability |
| Glass | 1wk/25°C | 0.30 | | none | panel | clean removability |
| | 1wk/50°C | 0.75 | | a | panel | clean removability |
| | 2wk/25°C | 0.4 | | a | panel | clean removability |
| | 2wk/50°C | 0.95 | | a | panel | clean removability |
| Painted M | 1wk/25°C | 1.05 | | a | panel | clean removability |
| | 1wk/50°C | 0.45 | | a | panel | clean removability |
| | 2wk/25°C | 1.0 | | a | panel | clean removability |
| | 2wk/50°C | 0.85 | | a | panel | clean removability |
| Plastic | 1wk/25°C | 1.75 | | a | panel stain | clean removability |
| | 1wk/50°C | 1.65 | | a | panel stain | clean removability |
| | 2wk/25°C | 1.65 | | a | panel stain | clean removability |
| | 2wk/50°C | 2.15 | | a | panel stain | clean removability |
| Corrugated | 1wk/25°C | 0.80 | | none | panel | clean removability |
| | 1wk/50°C | 0.775 | | a | panel | clean removability |
| | 2wk/25°C | 0.63 | | a | panel | clean removability |
| | 2wk/50°C | 0.75 | | a | panel | clean removability |
| Paper | 1wk/25°C | 1.0 | | a | panel | clean removability |
| | 1wk/50°C | 0.90 | | a | panel | clean removability |
| | 2wk/25°C | 0.95 | | a | panel | clean removability |
| | 2wk/50°C | 1.2 | | a | panel | clean removability |

**TABLE 8**

| Substrate | Aging Cond. | 90° Peel | Looptack | Edge Lift | Failure | Remarks |
|---|---|---|---|---|---|---|
| Stainless | 1wk/25°C | 1.2 | 0.01 | b | panel | clean removability |
| steel | 1wk/50°C | 1.3 | 0.01 | a | panel | clean removability |
| | 2wk/25°C | 1.1 | 0.01 | a | panel | clean removability |
| | 2wk/50°C | 1.45 | 0.01 | a | panel | clean removability |
| Glass | 1wk/25°C | 0.325 | | none | panel | clean removability |
| | 1wk/50°C | 1.2 | | a | panel | clean removability |
| | 2wk/25°C | 0.5 | | a | panel | clean removability |
| | 2wk/50°C | Tear | | a | Tear | clean removability |
| Painted M | 1wk/25°C | 1.0 | | none | panel | clean removability |
| | 1wk/50°C | 1.3 | | a | panel | clean removability |
| | 2wk/25°C | 1.2 | | a | panel | clean removability |
| | 2wk/50°C | Tear | | a | Tear | clean removability |
| Plastic | 1wk/25°C | 1.8 | | none | panel stain | clean removability |
| | 1wk/50°C | 1.7 | | a | panel stain | clean removsbitity |
| | 2wk/25°C | 1.5 | | a | panel stain | clean removability |
| | 2wk/50°C | 2.25 | | a | panel stain | clean removability |
| Corrugated | 1wk/25°C | 0.425 | | none | panel | clean removability |
| | 1wk/50°C | 0.425 | | a | panel | clean removability |
| | 2wk/25°C | 0.7 | | a | panel | clean removability |
| | 2wk/50°C | 0.55 | | a | panel | clean removability |
| Paper | 1wk/25°C | 0.95 | | none | panel | clean removability |
| | 1wk/50°C | 1.00 | | a | panel | clean removability |
| | 2wk/25°C | 0.95 | | a | panel | clean removability |
| | 2wk/50°C | 1.2 | | a | panel | clean removability |
| a = 0.40 mm (1/64 inch); b = 0.80 mm (1/32 inch). | | | | | | |

**TABLE 6 A**

| Substrate | Aging Cond. | 90° Peel | Looptack | Edge Lift | Failure | Remarks |
|---|---|---|---|---|---|---|
| Stainless | 1wk/25°C | 0·14 | 0·002 | none | panel | clean removability |
| steel | 1wk/50°C | 0·20 | 0·002 | a | panel | clean removability |
| | 2wk/25°C | 0·13 | 0·05 | a | panel | clean removability |
| | 2wk/50°C | 0·25 | 0·05 | a | panel | clean removability |
| Glass | 1wk/25°C | 0·03 | | b | panel | clean removability |
| | 1wk/50°C | 0·90 | | a | panel | clean removability |
| | 2wk/25°C | 0·29 | | a | panel | clean removability |
| | 2wk/50°C | 0·04 | | a | panel | clean removability |
| | | 0.18 | | | | |
| Painted N | 1wk/25°C | 0·13 | | a | panel | clean removability |
| | 1wk/50°C | 0·21 | | a | panel | clean removability |
| | 2wk/25°C | 0·15 | | a | panel | clean removability |
| | 2wk/50°C | 0.20 | | a | panel | clean removability |
| Plastic | 1wk/25°C | 0.26 | | a | panel | clean removability |
| | 1wk/50°C | 0.37 | | a | panel | clean removability |
| | 2wk/25°C | 0.27 | | a | panel | clean removability |
| | 2wk/50°C | 0·34 | | a | panel | clean removability |
| Corrugated | 1wk/25°C | 0.07 | | none | panel stain | clean removability |
| | 1wk/50°C | 0.90 | | a | panel stain | clean removability |
| | 2wk/25°C | 0.07 | | a | panel stain | clean removability |
| | 2wk/50°C | 0.89 | | a | panel stain | clean removability |
| | | 0.09 | | | | |
| Paper | 1wk/25°C | 0·15 | | a | panel | clean removability |
| | 1wk/50°C | 0·16 | | a | panel | clean removability |
| | 2wk/25°C | 0·20 | | a | panel | clean removability |
| | 2wk/50°C | 0·27 | | a | panel | clean removability |
| a = 0.40 mm (1/64 inch); b = 0.80 mm (1/32 inch). | | | | | | |

**TABLE 7A**

| Substrate | Aging Cond. | 90° Peel | Looptack | edge Lift | Failure | Remarks |
|---|---|---|---|---|---|---|
| Stainless steel | 1wk/25°C | 0.17 | 0.002 | none | panel | clean removability |
| | 1wk/50°C | 0.24 | 0.002 | a | panel | clean removability |
| | 2wk/25°C | 0.16 | 0.002 | a | panel | clean removability |
| | 2wk/50°C | 0.28 | 0·002 | a | panel | clean removability |
| Glass | 1wk/25°C | 0·05 | | a | panel | clean removability |
| | 1wk/50°C | 0.13 | | a | panel | clean removability |
| | 2wk/25°C | 0.07 | | a | panel | clean removability |
| | 2wk/50°C | 0.17 | | a | panel | clean removability |
| Painted M | 1wk/25°C | 0.19 | | a | panel | clean removability |
| | 1wk/50°C | 0.08 | | a | panel | clean removability |
| | 2wk/25°C | 0.18 | | a | panel | clean removability |
| | 2wk/50°C | 0.15 | | a | panel | clean removability |
| Plastic | 1wk/25°C | 0.31 | | a | panel stain | clean removability |
| | 1wk/50°C | 0.29 | | a | panel stain | clean removability |
| | 2wk/25°C | 0.29 | | a | panel stain | clean removability |
| | 2wk/50°C | 0.38 | | a | panel stain | clean removability |
| Corrugated | 1wk/25°C | 0.14 | | none | panel | clean removability |
| | 1wk/50°C | 0.14 | | a | panel | clean removability |
| | 2wk/25°C | 0.11 | | a | panel | clean removability |
| | 2wk/50°C | 0.13 | | a | panel | clean removability |
| Paper | 1wk/25°C | 0.18 | | a | panel | clean removability |
| | 1wk/50°C | 0.16 | | a | panel | clean removability |
| | 2wk/25°C | 0.17 | | a | panel | clean removability |
| | 2wk/50°C | 0.21 | | a | panel | clean removability |

**TABLE 8 A**

| Substrate | Aging Cond. | 90° Peel | Looptack | Edge Lift | Failure | Remarks |
|---|---|---|---|---|---|---|
| Stainless steel | 1wk/25°C | 0·21 | 0·002 | b | panel | clean removability |
| | 1wk/50°C | 0·23 | 0·002 | a | panel | clean removability |
| | 2wk/25°C | 0·19 | 0·002 | a | panel | clean removability |
| | 2wk/50°C | 0·26 | 0·002 | a | panel | clean removability |
| Glass | 1wk/25°C | 0·06 | | none | panel | clean removability |
| | 1wk/50°C | 0·21 | | a | panel | clean removability |
| | 2wk/25°C | 0.09 | | a | panel | clean removability |
| | 2wk/50°C | Tear | | a | Tear | clean removability |
| Painted M | 1wk/25°C | 0·18 | | none | panel | clean removability |
| | 1wk/50°C | 0.23 | | a | panel | clean removability |
| | 2wk/25°C | 0·21 | | a | panel | clean removability |
| | 2wk/50°C | Tear | | a | Tear | clean removability |
| Plastic | 1wk/25°C | 0·32 | | none | panel stain | clean removability |
| | 1wk/50°C | 0·30 | | a | panel stain | clean removability |
| | 2wk/25°C | 0.27 | | a | panel stain | clean removability |
| | 2wk/50°C | 0·40 | | a | panel stain | clean removability |
| Corrugated | 1wk/25°C | 0·08 | | none | panel | clean removability |
| | 1wk/50°C | 0·08 | | a | panel | clean removability |
| | 2wk/25°C | 0·12 | | a | panel | clean removability |
| | 2wk/50°C | 0·10 | | a | panel | clean removability |
| Paper | 1wk/25°C | 0·17 | | none | panel | clean removability |
| | 1wk/50°C | 0·18 | | a | panel | clean removability |
| | 2wk/25°C | 0·17 | | a | panel | clean removability |
| | 2wk/50°C | 0·21 | | a | panel | clean removability |
| a = 0.40 mm (1/64 inch); b = 0.80 mm (1/32 inch). | | | | | | |

**TABLE 9**

| % dry weight | Cont 4 | Ex 5 | Ex 6 | Ex 7 | Ex 8 | R.Ex.9 |
|---|---|---|---|---|---|---|
| | | | | | | |
| AVC 3666 | 90 | 89.43 | 99.16 | 98.75 | 92.02 | 90.97 |
| Aquacer 533 | | 0.67 | 0.84 | 1/25 | 1.11 | |
| Aerosol 18 | | | | | | 2.24 |
| Butylbenzylphthalatc | 10 | 9.9 | | | 6.87 | 6.79 |

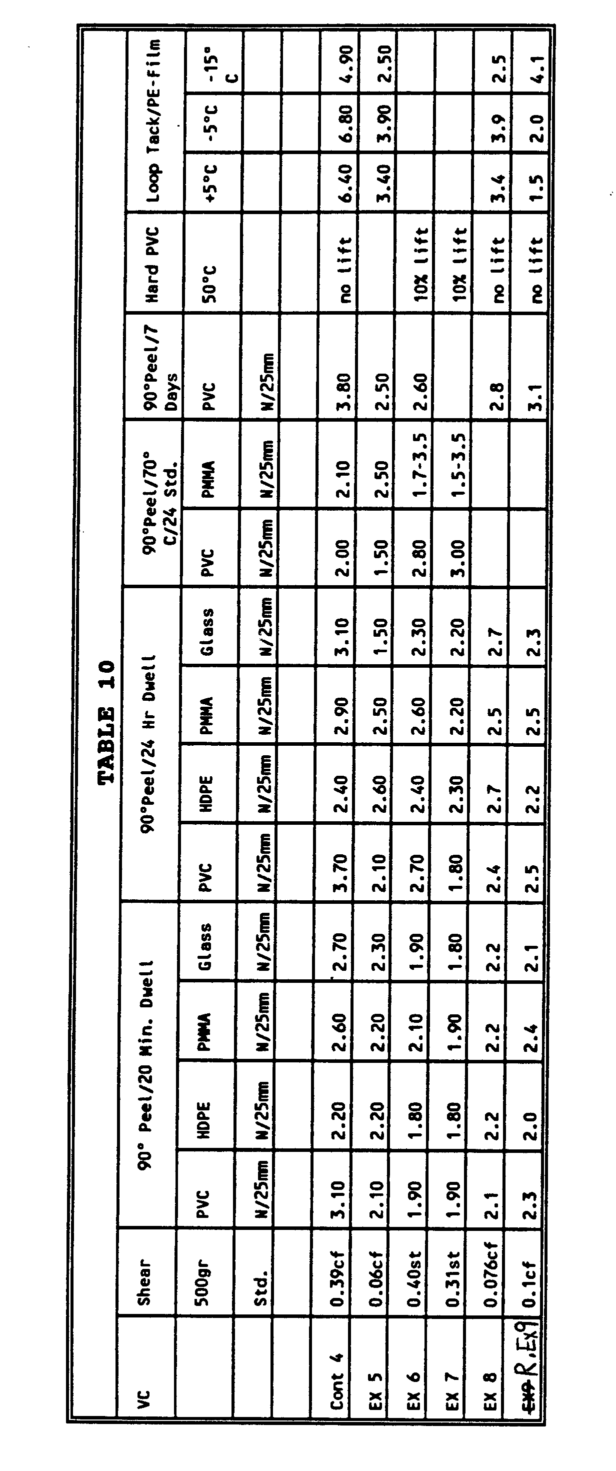

## Claims

1. A guillotinable and substrate-removable pressure-sensitive adhesive composition comprising a tacky acrylic emulsion polymer in admixture with 0.5 to 1.5% by weight of an emulsifiable wax, based on the weight of the acrylic emulsion polymer and the emulsifiable wax.

2. A composition as claimed in claim 1 in which the tacky acrylic emulsion polymer is cross-linked.

3. A composition as claimed in claim 1 or claim 2, in which emulsifiable wax is a paraffin wax.

4. A guillotinable and removable pressure-sensitive adhesive stock comprising a backing providing on a surface thereof a coating of a guillotinable and removable pressure-sensitive adhesive composition comprising an acrylic emulsion polymer in admixture with from 0.5 to 1.5% of an emulsifiable wax, based on the weight of emulsifiable wax and the acrylic emulsion polymer.

5. A pressure-sensitive adhesive stock as claimed in claim 4 in which the backing is paper or polymeric sheet.

6. A pressure-sensitive adhesive stock as claimed in claim 4 in which the backing is matte litho paper, cast coated high gloss paper, uncoated offset paper, recycled matte litho paper, latex saturated face paper, clear acetate or matte acetate.

7. A pressure-sensitive adhesive stock as claimed in claim 4 in which the emulsifiable wax is paraffin wax.

8. A pressure-sensitive adhesive stock as claimed in claim 4 in which the tacky acrylic emulsion polymer is cross-linked.

9. A method for preparing a guillotinable and substrate-removable pressure-sensitive adhesive composition comprising:
providing a tacky pressure-sensitive adhesive acrylic emulsion polymer; and
mixing the emulsion polymer with a modifying agent to reduce its adhesivity promoting removability and provide sufficient lubricity to promote guillotinability, the emulsion-modifying agent being selected from:
i. a nonionic surfactant present in an amount of from 0.5 to 3.5% by weight based on the weight of the nonionic surfactant and the emulsion polymer;
ii. an emulsifiable wax present in an amount of from 0.5 to 1.5% by weight based on the weight of the emulsifiable wax and the emulsion polymer; and
iii. a blend of an emulsifiable wax and a nonionic surfactant in which the emulsifiable wax and nonionic surfactant are present in a combined amount of less than 3% by weight based on the total weight of the emulsifiable wax, surfactant and the emulsion polymer.

10. A method for preparing a guillotinable and removable pressure-sensitive adhesive stock comprising the use of an adhesive composition prepared by the steps of:
providing a tacky pressure-sensitive adhesive acrylic emulsion polymer;
modifying the emulsion polymer by adding to it a modifying agent that reduces its adhesivity promoting removability and provides sufficient lubricity to promote guillotinability, to form a coating on the stock of a guillotinable and removable pressure-sensitive adhesive, the emulsion-modifying agent being selected from:
i. from 0.5 to 1.5% of an emulsifiable wax based on the weight of emulsifiable wax and emulsion polymer;
ii. from 0.5 to 3.5% by weight of a nonionic surfactant based on the weight of surfactant and emulsion polymer; and
iii. a mixture of a nonionic surfactant and an emulsifiable wax in which the mixture of the wax and nonionic surfactant are present in an amount of less than 3% by weight of the added emulsifiable wax, surfactant and emulsion polymer.

11. A method as claimed in claim 10 wherein the stock has a backing of paper or polymeric sheet.

12. A method as claimed in claim 9, 10 or 11 wherein the emulsion-modifying agent is a polyoxyethylene-polyoxypropylene block copolymer.

13. A method as claimed in claim 9, 10 or 11 wherein the emulsion-modifying agent is a nonionic surfactant having an HLB value greater than 24.

14. A method as claimed in claim 9, 10 or 11 wherein the emulsion-modifying agent is paraffin wax.

15. Use of a nonionic surfactant, an emulsifiable wax or a mixture of a nonionic surfactant and an emulsifiable wax, as an additive to a pressure-sensitive acrylic adhesive emulsion polymer to reduce adhesivity of an adhesive coating made from the emulsion, to promote removability, and to provide sufficient lubricity of the coating to promote guillotinability, wherein
i. said surfactant is used in an amount of 0.5 to 3.5% by weight based on the weight of the surfactant and the emulsion polymer;
ii. said wax is used in an amount of 0.5 to 1.5% by weight based on the weight of the wax and the emulsion polymer, and
iii. the mixture of surfactant and wax is used in a combined amount of less than 3% by weight based on the total weight of surfactant, wax and emulsion polymer.

## Patentansprüche

1. Eine schneidbare und Substrat-ablösbare Haftklebstoffmasse, umfassend ein klebriges acrylisches Emulsionspolymer in einem Gemisch mit 0,5 bis 1,5 Gew.-% eines emulgierbaren Wachses, bezogen auf das Gewicht des acrylischen Emulsionspolymeren und des emulgierbaren Wachses.

2. Eine Zusammensetzung nach Anspruch 1, wobei das klebrige acrylische Emulsionspolymer vernetzt ist.

3. Eine Zusammensetzung nach Anspruch 1 oder Anspruch 2, wobei das emulgierbare Wachs ein Paraffinwachs ist.

4. Ein schneidbares und ablösbares Haftklebstoffmaterial, umfassend einen Träger, der auf einer Oberfläche hiervon eine Schicht einer schneidbaren und ablösbaren Haftklebstoffmasse bereitstellt, umfassend ein acrylisches Emulsionspolymer in einem Gemisch mit 0,5 bis 1,5% eines emulgierbaren Wachses, bezogen auf das Gewicht des emulgierbaren Wachses und des acrylischen Emulsionspolymeren.

5. Ein Haftklebstoffmaterial nach Anspruch 4, wobei der Träger Papier oder Polymerfolie ist.

6. Ein Haftklebstoffmaterial nach Anspruch 4, wobei der Träger mattes Lithografenpapier, gießgestrichenes Hochglanzpapier, unbeschichtetes Offsetpapier, recyceltes mattes Lithografenpapier, Latex-gesättigtes Deckpapier, klares Acetat oder mattes Acetat ist.

7. Ein Haftklebstoffmaterial nach Anspruch 4, wobei das emulgierbare Wachs Paraffinwachs ist.

8. Ein Haftklebstoffmaterial nach Anspruch 4, wobei das klebrige acrylische Emulsionspolymer vernetzt ist.

9. Ein Verfahren zur Herstellung einer schneidbaren und Substrat-ablösbaren Haftklebstoffmasse, umfassend:
Bereitstellen eines klebrigen haftklebenden acrylischen Emulsionspolymeren; und
Mischen des Emulsionspolymeren mit einem Modifizierungsmittel unter Verminderung seines Haftvermögens, was die Ablösbarkeit beschleunigt, und Bereitstellung von genügend Gleitfähigkeit zur Förderung der Schneidfähigkeit, wobei das Emulsions-modifizierende Mittel ausgewählt ist aus:
i. einem nichtionischen oberflächenaktiven Mittel, das in einer Menge von 0,5 bis 3,5 Gew.-%, bezogen auf das Gewicht des nichtionischen oberflächenaktiven Mittels und des Emulsionspolymeren, vorhanden ist;
ii. einem emulgierbaren Wachs, das in einer Menge von 0,5 bis 1,5 Gew.-%, bezogen auf das Gewicht des emulgierbaren Wachses und des Emulsionspolymeren, vorhanden ist; und
iii. einer Mischung aus einem emulgierbaren Wachs und einem nichtionischen oberflächenaktiven Mittel, wobei das emulgierbare Wachs und das nichtionische oberflächenaktive Mittel in einer kombinierten Menge von weniger als 3 Gew.-%, bezogen auf das Gesamtgewicht des emulgierbaren Wachses, des oberflächenaktiven Mittels und des Emulsionspolymeren, vorhanden sind.

10. Ein Verfahren zur Herstellung eines schneidbaren und ablösbaren Haftklebstoffmaterials, umfassend die Verwendung einer durch folgende Schritte hergestellten Klebemasse:
Bereitstellen eines klebrigen haftklebenden acrylischen Emulsionspolymeren;
Modifizieren des Emulsionspolymeren durch Zugabe eines Modifizierungsmittels, das sein Haftvermögen vermindert und die Ablösbarkeit beschleunigt und eine ausreichende Gleitfähigkeit zur Förderung der Schneidfähigkeit bereitstellt, unter Bildung einer Beschichtung aus einem schneidbaren und ablösbaren Haftklebstoff auf dem Material, wobei das Emulsions-modifizierende Mittel ausgewählt ist aus:
i. 0,5 bis 1,5 Gew.-% eines emulgierbaren Wachses, bezogen auf das Gewicht des emulgierbaren Wachses und des Emulsionspolymeren;
ii. 0,5 bis 3,5 Gew.-% eines nichtionischen oberflächenaktiven Mittels, bezogen auf das Gewicht des oberflächenaktiven Mittels und des Emulsionspolymeren; und
iii. einer Mischung aus einem nichtionischen oberflächenaktiven Mittel und einem emulgierbaren Wachs, wobei das Gemisch des Wachses und des nichtionischen oberflächenaktiven Mittels in einer Menge von weniger als 3 Gew.-% des zugegebenen emulgierbaren Wachses, des oberflächenaktiven Mittels und des Emulsionspolymeren vorhanden ist.

11. Ein Verfahren nach Anspruch 10, wobei das Material einen Träger aus Papier oder Polymerfolie aufweist.

12. Ein Verfahren nach Anspruch 9, 10 oder 11, wobei das Emulsions-modifizierende Mittel ein Polyoxyethylen-Polyoxypropylen-Blockcopolymer ist.

13. Ein Verfahren nach Anspruch 9, 10 oder 11, wobei das Emulsions-modifizierende Mittel ein nichtionisches oberflächenaktives Mittel mit einem HLB-Wert von größer als 24 ist.

14. Ein Verfahren nach Anspruch 9, 10 oder 11, wobei das Emulsions-modifizierende Mittel Paraffinwachs ist.

15. Verwendung eines nichtionischen oberflächenaktiven Mittels, eines emulgierbaren Wachses oder eines Gemisches aus einem nichtionischen oberflächenaktiven Mittel und einem emulgierbaren Wachs als Zusatzstoff zu einem haftklebenden acrylischen Emulsionspolymeren zur Verminderung des Haftvermögens einer aus der Emulsion hergestellten Klebstoffbeschichtung, zur Förderung der Ablösbarkeit und zur Bereitstellung von genügend Gleitfähigkeit der Beschichtung zur Unterstützung der Schneidfähigkeit, wobei
i. das oberflächenaktive Mittel in einer Menge von 0,5 bis 3,5 Gew.-%, bezogen auf das Gewicht des oberflächenaktiven Mittels und des Emulsionspolymeren, verwendet wird;
ii. das Wachs in einer Menge von 0,5 bis 1,5 Gew.-%, bezogen auf das Gewicht des Wachses und des Emulsionspolymeren, verwendet wird, und
iii. das Gemisch von oberflächenaktivem Mittel und Wachs in einer kombinierten Menge von weniger als 3 Gew.-%, bezogen auf das Gesamtgewicht von oberflächenaktivem Mittel, Wachs und Emulsionspolymerem, verwendet wird.

## Revendications

1. Composition d'adhésif auto-collant détachable du substrat et massicotable, comprenant un polymère acrylique en émulsion collant mélangé à 0,5 à 1,5% en poids d'une cire émulsionnable, rapporté au poids du polymère acrylique en émulsion et de la cire émulsionnable.

2. Composition selon la revendication 1 dans laquelle le polymère acrylique en émulsion collant est réticulé.

3. Composition selon la revendication 1 ou la revendication 2, dans laquelle la cire émulsionnable est une cire de paraffine.

4. Pellicule frontale auto-collante détachable et massicotable, comprenant un support portant sur une de ses surfaces un revêtement d'une composition d'adhésif auto-collant détachable et massicotable comprenant un polymère acrylique en émulsion mélangé à 0,5 à 1,5% en poids d'une cire émulsionnable, rapporté au poids de la cire émulsionnable et du polymère acrylique en émulsion.

5. Pellicule frontale auto-collante selon la revendication 4 dans laquelle le support est une feuille de papier ou de polymère.

6. Pellicule frontale auto-collante selon la revendication 4 dans laquelle le support est un papier lithographique mat, un papier couché à haut brillant, un papier offset non revêtu, un papier lithographique mat recyclé, un papier à face saturée de latex, un acétate de cellulose transparent ou un acétate de cellulose dépoli.

7. Pellicule frontale auto-collante selon la revendication 4 dans laquelle la cire émulsionnable est une cire de paraffine.

8. Pellicule frontale auto-collante selon la revendication 4 dans laquelle le polymère acrylique en émulsion collant est réticulé.

9. Procédé de préparation d'une composition d'adhésif auto-collant détachable du substrat et massicotable, comprenant :
la fourniture d'un polymère acrylique en émulsion auto-adhésif collant ; et
le mélange du polymère en émulsion avec un agent modificateur pour réduire sa capacité de détachement favorisant l'adhésivité et donner un pouvoir lubrifiant suffisant pour favoriser l'aptitude au découpage, l'agent modificateur d'émulsion étant choisi parmi :
i. un tensioactif non ionique présent en une quantité de 0,5 à 3,5% en poids rapporté au poids du tensioactif non ionique et du polymère en émulsion ;
ii. une cire émulsionnable présente en une quantité de 0,5 à 1,5% en poids rapporté au poids de la cire émulsionnable et du polymère en émulsion ; et
iii. un mélange d'une cire émulsionnable et d'un tensioactif non ionique dans lequel la cire émulsionnable et le tensioactif non ionique sont présents en une quantité combinée de moins de 3% en poids rapporté au poids total de la cire émulsionnable, du tensioactif et du polymère en émulsion.

10. Procédé de préparation d'une pellicule frontale auto-collante détachable et massicotable, comprenant l'utilisation d'une composition d'adhésif préparée par les étapes de :
fourniture d'un polymère acrylique en émulsion autoadhésif collant ; et
modification du polymère en émulsion par ajout à ce dernier d'un agent modificateur qui réduit sa capacité de détachement favorisant l'adhésivité et donne un pouvoir lubrifiant suffisant pour favoriser l'aptitude au découpage, pour former un revêtement sur la pellicule frontale d'un adhésif auto-collant détachable et massicotable, l'agent modificateur d'émulsion étant choisi parmi :
i. de 0,5 à 1,5% d'une cire émulsionnable rapporté au poids de cire émulsionnable et de polymère en émulsion ;
ii. de 0,5 à 3,5% en poids d'un tensioactif non ionique rapporté au poids de tensioactif et de polymère en émulsion ; et
iii. un mélange d'un tensioactif non ionique et d'une cire émulsionnable, mélange dans lequel la cire et le tensioactif non ionique sont présents en une quantité de moins de 3% en poids de la cire émulsionnable, du tensioactif, et du polymère en émulsion, ajoutés.

11. Procédé selon la revendication 10 dans lequel la pellicule frontale a un support fait d'une feuille de papier ou de polymère.

12. Procédé selon la revendication 9, 10 ou 11 dans lequel l'agent modificateur d'émulsion est un copolymère bloc de polyoxyéthylène-polyoxypropylène.

13. Procédé selon la revendication 9, 10 ou 11 dans lequel l'agent modificateur d'émulsion est un tensioactif non ionique ayant un indice HLB supérieur à 24.

14. Procédé selon la revendication 9, 10 ou 11 dans lequel l'agent modificateur d'émulsion est une cire de paraffine.

15. Utilisation d'un tensioactif non ionique, d'une cire émulsionnable ou d'un mélange d'un tensioactif non ionique et d'une cire émulsionnable, en tant qu'additif à un polymère acrylique adhésif auto-collant en émulsion pour réduire l'adhésivité d'un revêtement adhésif préparé à partir de l'émulsion, pour favoriser la capacité de détachement, et pour donner un pouvoir lubrifiant du revêtement suffisant pour favoriser l'aptitude au découpage, où :
i. ledit tensioactif est utilisé en une quantité de 0,5 à 3,5% en poids rapporté au poids du tensioactif et du polymère en émulsion ;
ii. ladite cire est utilisée en une quantité de 0,5 à 1,5% en poids rapporté au poids de la cire et du polymère en émulsion ; et
iii. le mélange de tensioactif et de cire est utilisé en une quantité combinée de moins de 3% en poids rapporté au poids total de tensioactif, de cire et de polymère en émulsion.
